# EUROPÄISCHE PATENTSCHRIFT

(11) **EP 3 175 169 B1**
(45) Veröffentlichungstag und Bekanntmachung des Hinweises auf die Patenterteilung: **12.09.2018**
(21) Anmeldenummer: 15741527.4
(22) Anmeldetag: 20.07.2015
(51) Int. Cl.: F21S 4/28, F21S 8/00, F21V 21/02, F21V 21/08, F21V 21/088, H02B 1/30, H05K 5/02, F21V 21/30, F21Y 115/10, F21W 131/30, F21V 23/06

(54) **SCHALTSCHRANKLEUCHTE MIT LEUCHTMITTELN AUF DER BASIS VON LICHTEMITTIERENDEN DIODEN**
SWITCHGEAR CABINET LUMINAIRE COMPRISING ILLUMINANTS ON THE BASIS OF LIGHT EMITTING DIODES
LAMPE D'ARMOIRE DE DISTRIBUTION MUNIE DE MOYENS D'ÉCLAIRAGE À BASE DE DIODES ÉLECTROLUMINESCENTES

(30) Priorität: 29.07.2014 DE 102014011275; 08.12.2014 DE 102014018083; 21.01.2015 DE 102015000733
(43) Veröffentlichungstag der Anmeldung: 07.06.2017
(73) Patentinhaber: Seifert MTM Systems (Malta) Ltd., 3000 Birzebbuga (MT)
(72) Erfinder: SEIFERT, Michael, Madliena SWQ1 015 (MT)
(74) Vertreter: Kruspig, Volkmar
(86) Internationale Anmeldenummer: PCT/EP2015/066533
(87) Internationale Veröffentlichungsnummer: WO 2016/016030

(56) Entgegenhaltungen:
- EP-A1- 2 650 594
- EP-A1- 2 827 052
- EP-A2- 2 375 128
- EP-A2- 2 400 210
- EP-A2- 2 442 010
- DE-A1-102012 202 148
- DE-U1-202011 107 688
- DE-U1-202012 104 978
- US-A1- 2013 120 974

## Beschreibung

Die Erfindung betrifft eine Schaltschrankleuchte mit Leuchtmitteln auf der Basis von lichtemittierenden Dioden, bestehend aus einem langgestreckten Leuchtengehäuse mit Gehäusegrundkörper und lichtdurchlässiger Abdeckung sowie elektrischen Anschlusselementen und am Leuchtengehäuse vorgesehenen Mitteln zur universellen Befestigung gemäß Oberbegriff des Anspruchs 1.

Schaltschrankleuchten auf der Basis von lichtemittierenden Dioden gehören zum Stand der Technik. Auf LED-Basis betriebene Leuchten sind im Vergleich zu Leuchtstoffröhren energiesparend, leicht, robust und langlebig. Schaltschrankleuchten sind mit entsprechenden Schaltmitteln versehen und können mit einer Netzsteckdose ausgerüstet sein. Bekannt sind darüber hinaus Varianten mit Bewegungsmelder oder Türendschalter. Über steckbare Verbindungskabel lassen sich mehrere LED-Leuchten miteinander verbinden.

Bezüglich der Beleuchtung von Schaltschränken mit Lichtquellen auf LED-Basis sei beispielsweise auf die DE 10 2009 004 062 A1 verwiesen. Die dort beschriebene transportable Lichtquelle kann grundsätzlich batterie- oder akkubetrieben werden. Auch kann im jeweiligen Schaltschrank eine Stromversorgung vorhanden sein, an der die Lichtquelle anzuschließen ist. Um die Lichtquelle an verschiedenen Stellen im Schaltschrank anzuordnen, ist ein Permanentmagnet vorhanden, um ein Befestigen der Leuchte an metallischen Komponenten des Schaltschranks zu ermöglichen.

Bei der Schaltschrankleuchte nach DE 201 09 396 U1 ist ein Leuchtengehäuse mit Befestigungsvorrichtungen zur Herstellung einer Verbindung zum Schaltschrank nebst Leuchtmittel und eine Steckverbindung an der Leuchte vorgesehen. Das dortige Leuchtengehäuse weist in einem mittleren Bereich mindestens das Leuchtmittel und in zwei äußeren Bereichen die Befestigungs- und/oder Bedienelemente auf.

Eine Schaltschrankleuchte für einen netzunabhängigen Betrieb ist in der DE 200 16 067 U1 beschrieben. In einem dort erläuterten abnehmbaren und freibeweglichen Leuchtenkörper ist ein Energiespeicher, z.B. in Form eines Akkumulators eingesetzt, um den gewünschten netzunabhängigen Betrieb zu gewährleisten. Darüber hinaus ist im Leuchtenhaltesockel ein Ladegerät mit Ladezustandsregelung befindlich.

Bei der gattungsbildenden Schaltschrankleuchte mit Leuchtmittel auf der Basis von lichtemittierenden Dioden nach EP 1 670 107 B1 ist das Leuchtengehäuse beispielsweise über hakenförmige Rastmittel in einer Montagelochung eines Profilabschnitts im Leuchtengehäuse einsetzbar. Alternativ können die Seitenflächen des Gehäuses der Leuchte Befestigungslochungen zum Durchführen von Schrauben aufweisen, mittels derer die Leuchte an der vorerwähnten Profilleiste befestigbar ist. Ebenso besteht die Möglichkeit, dass das Gehäuse mittels Magneten an mindestens einem Profilabschnitt fixiert ist.

Um eine besonders gleichmäßige Ausleuchtung eines Schaltschranks zu gewährleisten, ist nach EP 1 670 107 B1 vorgeschlagen, mehrere Leuchten innerhalb eines Schaltschranks anzuordnen und in Reihe zu schalten. Hierfür wird auf entsprechende Steckverbindungen verwiesen, um die Leuchten elektrisch zu verbinden. Bei einer Ausführungsform können ein integrierter Bewegungsmelder und/oder eine Steckdose am Leuchtenkörper angeordnet werden.

Aus den Dokumenten EP 2 650 594, EP 2 442 010 und EP 2 400 210 sind schwenkbare Leuchten bekannt.
Aus dem Vorgenannten ist es daher Aufgabe der Erfindung, eine weiterentwickelte Schaltschrankleuchte mit Leuchtmitteln auf der Basis von lichtemittierenden Dioden, bestehend aus einem langgestreckten Leuchtengehäuse mit Gehäusegrundkörper und lichtdurchlässiger Abdeckung sowie elektrischen Anschlusselementen anzugeben, welche je nach Einsatzzweck an beliebigen Stellen eines Schaltschranks oder dergleichen sicher befestigt werden kann und wobei die Möglichkeit erhalten bleibt, mittels Verschwenken eine optimale Strahlausrichtung der Leuchte zu bewirken, so dass auch unter ungünstigen Verhältnissen Wartungs- und Installationsarbeiten mit der entsprechenden Sicherheit durchgeführt werden können. Es soll hierbei von einem quasi universellen Leuchtengehäuse ausgegangen werden, das mit Mitteln versehen ist, um verschiedene Befestigungselemente unter Erhalt der Verschwenkbarkeit mit dem Leuchtengehäuse zu verbinden. Wenn erforderlich, soll die Leuchte werkzeugfrei aus der jeweiligen Befestigung entnehmbar sein, um die Leuchte auch als Handleuchte vor Ort zu nutzen. Weiterhin soll ein Aneinanderreihen mehrerer Leuchten nebst durchgeschleiften elektrischen Anschlüssen möglich sein, wobei die erforderliche elektrische Sicherheit gegeben ist.

Die Lösung der Aufgabe der Erfindung erfolgt durch eine Schaltschrankleuchte mit Leuchtmitteln auf der Basis von lichtemittierenden Dioden gemäß der Merkmalskombination nach Anspruch 1, wobei die Unteransprüche mindestens zweckmäßige Ausgestaltungen und Weiterbildungen darstellen.

Es sei an dieser Stelle darauf aufmerksam gemacht, dass die Begrifflichkeit der Schaltschrankleuchte so zu verstehen ist, dass die erfindungsgemäße Leuchte selbstverständlich nicht nur in elektrischen Schaltschränken, sondern grundsätzlich überall dort einsetzbar ist, wo die unterschiedlichsten Möglichkeiten zum Fixieren eines langgestreckten Leuchtenkörpers bestehen. Dies kann z.B. auch in Kellerräumen der Hausinstallation, in Kraftfahrzeug-Montagegruben, in Schränken zur Materialaufbewahrung und so weiter der Fall sein.

Die erfindungsgemäße Schaltschrankleuchte ist als sogenannte Weitspannungsleuchte ausgestaltet, d.h. die Leuchte kann mit einer Versorgungsspannung von 24 V Gleichspannung bis zu über 260 V Wechselspannung betrieben werden. Irgendwelche Anpassungen wie z.B. das Umschalten auf einen anderen Spannungsbereich sind nicht erforderlich.

Die erfindungsgemäße Schaltschrankleuchte geht von einem wannenartigen Gehäusegrundkörper aus. Im Gehäusegrundkörper befinden sich alle notwendigen elektrischen Elemente bezüglich der Energieversorgung für die eingesetzten lichtemittierenden Dioden einschließlich eines Trägers, der die Dioden oder Diodengruppen aufnimmt.

An der Unterseite des Gehäusegrundkörpers und/oder im Seitenwandbereich des Gehäusegrundkörpers sind mehrere, beabstandete Ausnehmungen oder Rücksprünge zur lösbaren Aufnahme eines speziellen Schwenklagerträgers vorgesehen.

Diese Ausnehmungen oder Rücksprünge sind bevorzugt paarweise und über die Längserstreckung des Gehäusegrundkörpers beabstandet vorhanden, um mehrere der Schwenklagerträger fixieren zu können.

Der bzw. die Schwenklagerträger besitzen zwei, über mindestens einen Steg verbundene Seitenflächen, wobei die Seitenflächen jeweils eine Aufnahme für eine Schwenkachse oder jeweils einen Schwenkachsenstummel aufweisen.

Weiterhin sind ausgehend vom mindestens einen Steg Arme ausgebildet, welche zur Unterseite oder zum Seitenwandbereich des Gehäusegrundkörpers orientiert sind.

An ihrem freien Ende gehen die Arme jeweils in eine Rastnase oder einen Rasthaken zum Eingriff in die jeweiligen Ausnehmungen oder Rücksprünge am Gehäusegrundkörper über.

Die Arme können hierbei im Längsschnitt U-förmig ausgebildet sein und eine Betätigungsfläche besitzen, mit deren Hilfe zum Zweck des Lösens aus den Ausnehmungen oder Rücksprüngen im Gehäusegrundkörper eine Kraft aufbringbar ist dergestalt, dass quasi mit einem Zusammendrücken der Arme über die Betätigungsflächen die Rastnasen oder Rasthaken aus den entsprechenden Ausnehmungen oder Rücksprüngen heraustreten und freigegeben werden.

Weiterhin besitzen die Seitenflächen des Schwenklagerträgers eine nachgiebige, federnde Anschlagkante, welche mit der Unterseite des Gehäusegrundkörpers in Kontakt bringbar ist, wobei im von der Anschlagkante abgewandten Bereich in den Seitenflächen, radial ausgehend von der Aufnahme für die Schwenkachse oder den Schwenkachsenstummel, kreisbogenartig mehrere Rastungen zur Schwenkwinkelarretierung vorgesehen sind.

Durch die nachgiebig federnd ausgebildeten Anschlagkanten der jeweiligen Seitenflächen wird in Verbindung mit den Rastnasen oder Rasthaken nach dem Fixieren in den entsprechenden Ausnehmungen oder Rücksprüngen im Gehäusegrundkörper eine Vorspannung aufgebaut, die der Lagesicherung und der besseren Befestigung des Schwenklagerträgers am Gehäusegrundkörper dienen. Um die gewünschte nachgiebig federnde Anschlagkante auszubilden, kann die entsprechende Seitenfläche eine Überbiegung in Richtung Gehäusegrundkörper bezogen auf den Montagezustand besitzen, und zwar im Sinne sich in Verbindung mit einem großflächigen Rücksprung ergebenden federnden Abschnitts.

Die vorerwähnten Rastungen zur Schwenkwinkelarretierung können als auf einem Kreisbogenabschnitt verlaufende Bohrungen ausgeführt werden oder aber lediglich in Form von Rücksprüngen realisiert sein.

Es sei an dieser Stelle darauf hingewiesen, dass Rastausnehmung und Rasthaken bzw. das Ausbilden von Rastungen immer so zu verstehen ist, dass bezogen auf die Anordnung und Wechselwirkung von Ausnehmung und Haken bzw. Nase und Rücksprung auch eine jeweilige kinematische Umkehr denkbar ist, ohne den diesbezüglichen Erfindungsgedanken zu verlassen.

Im vorstehend erläuterten Schwenklagerträger ist wahlweise ein Fußteil einsetzbar, welches zwei Seitenwände mit Sockel umfasst, wobei an den Seitenwänden die Schwenkachse oder der entsprechende Achsstummel und weiterhin die zu den Rastungen komplementären Mittel ausgebildet sind.

Bevorzugt kann der Sockel mit den sich vom Sockel erstreckenden Seitenwänden einstückig bzw. einteilig, z.B. durch einen Spritzgussprozess, gefertigt werden, was im Übrigen ebenso für den Schwenklagerträger gilt. Die zu den Rastungen komplementären Mittel können z.B. jeweils eine Rastnase umfassen, die in die jeweligen Rücksprünge oder Bohrungen je nach Drehwinkelstellung einrasten und diesbezüglich den gewählten Drehwinkel fixieren. Der Abstand und das Maß der Bohrungen oder Rücksprünge in den Seitenflächen des Schwenklagerträgers bestimmen das Maß der Drehwinkelauflösung.

Der Sockel des Fußteils kann nun Mittel zur Hutschienenmontage, Mittel zur Fixierung an mit Rastaussparungen versehenen Profilen, aber auch Mittel zur schraubenden Befestigung oder eine Kombination dieser Mittel aufweisen oder umfassen.

An der Unterseite des Gehäusegrundkörpers der Schaltschrankleuchte sind jeweils gegenüberliegende Rücksprünge zur Aufnahme der Rasthaken oder Rastnasen und weiterhin rechtwinklig zur Längsachse des Leuchtengehäuses orientierte Nuten oder schienenartige Ausnehmungen vorhanden, wobei die Anschlagkanten des Schwenklagerträgers in die jeweiligen Nuten oder schienenartigen Ausnehmungen eintauchen. Auch diesbezüglich ist eine sichere Lagefixierung und ein ausreichender Halt des Schwenklagerträgers an der Schaltschrankleuchte und damit eine entsprechend sichere Befestigung gewährleistet.

Das beschriebene Leuchtengehäuse ist aneinander reihbar ausgeführt und weist diesbezüglich an den Stirnseiten elektrische Konnektoren zum quasi Durchschleifen der Stromversorgung für die Leuchte auf.

Am Gehäuse ist darüber hinaus die Möglichkeit zum Anbringen eines Schaltmittels und/oder eines eine elektrische Funktion auslösenden Bewegungssensors vorgesehen.

Alternativ oder grundsätzlich besteht die Möglichkeit, an oder in der Unterseite des Gehäusegrundkörpers einen Permanentmagneten, insbesondere einen Permanentmagnetstreifen oder mehrere solcher Streifen vorzusehen, um dann, wenn die Leuchte als Handleuchte genutzt wird, sie schnell und sicher zeitweise an metallischen Bauteilen des entsprechenden Schaltschranks zu fixieren, bevor selbige wieder rastend mit dem Schwenklagerträger bzw. dem Fußteil verbunden wird.

Bei einer Weiterbildung der Erfindungslehre sind im Leuchtengehäuse Mittel zum netzfreien Betrieb der Leuchtmittel, insbesondere Batterien oder Akkumulatoren vorgesehen.

Über die erwähnten stirnseitigen Konnektoren kann ein von der Kontur her angepasstes Steckdosenmodul und/oder Batterie- und/oder Akkumulatormodul angekoppelt werden. Dabei besteht auch die Möglichkeit, eine bereits vorhandene Schaltschrankleuchte mit diesen Funktionalitäten zu ergänzen oder nachzurüsten.

Gemäß der eingangs geschilderten Aufgabenstellung soll ein Aneinanderreihen mehrerer Leuchten nebst durchgeschleiften elektrischen Anschlüssen möglich sein, wobei beim Aneinanderreihen der Leuchten die erforderliche elektrische Berührungssicherheit gewährleistet ist.

Diesbezüglich wird von einem Verbindungselement zum Koppeln von Schaltschrankleuchten ausgegangen. Das Verbindungselement besteht bevorzugt aus einem isolierenden Kunststoffmaterial und weist in seinem Inneren elektrische Verbinder, z.B. ausgeführt als Pin, auf.

Das Mittel zum Koppeln der Schaltschrankleuchten besteht aus einem beidseitig offenen Hohlkörper, wobei die gegenüberliegenden offenen Seiten des Hohlkörpers mindestens abschnittsweise eine Querschnittsfläche aufweisen, welche der Querschnittsform des Leuchtengehäuses komplementär ist derart, dass die jeweiligen Enden des Leuchtengehäuses in die offenen Seiten des Hohlkörpers einsteck- und dort arretierbar sind. Bezüglich des Arretierens können übliche Rastnasen mit Rastausnehmungen korrespondieren, wobei z.B. an der Oberseite des Leuchtengehäuses Rastnasen vorgesehen sind und entsprechende Rastausnehmungen sich im Hohlkörper befinden. Selbstverständlich ist hier auch eine kinematische Umkehr denkbar.

Die Rastnasen besitzen bevorzugt die Eigenschaft, aus ihrer entspannten, Rastposition durch Drücken in eine solche Lage bewegt zu werden, dass ein Trennen zwischen der jeweiligen Leuchte und dem Verbinder bzw. Hohlkörper möglich ist. Eine entsprechende Ausbildung von Rastnase und Rastausnehmung liegt im Ermessen des Fachmanns.

Die im Inneren des Hohlkörpers befindlichen elektrischen Verbinder entsprechen in ihren Eigenschaften und ihrer Anzahl der beabsichtigten Stromversorgung der Leuchten und den Grundsätzen der elektrischen Sicherheit bezüglich Trennungsabstand, Spannungsfestigkeit und Stromtragfähigkeit. Diesbezüglich kann auf bewährte klassische elektrische Konnektoren zurückgegriffen werden, die als Male-Female-Steckteile bzw. Buchsen ausführbar sind.

Im Inneren des Hohlkörpers als Verbindungselement zum Koppeln von Schaltschrankleuchten befindet sich eine schwenkbewegliche Sperrklinke mit einem Anschlag sowie einem Blockiersteg.

Der Blockiersteg verhindert ein Einstecken einer spannungsführenden Schaltschrankleuchte so lange, bis in die gegenüberliegende offene Seite des Hohlkörpers eine weitere, anzukoppelnde, spannungsfreie Schaltschrankleuchte eingesteckt ist. Durch diese Maßnahme wird verhindert, dass über die offene Seite des Hohlkörpers bei ansonsten möglicher eingesteckter stromführender Leuchte die im Inneren befindlichen stromführenden Verbinder berührt werden können.

Mit erfolgtem Einstecken der spannungslosen Schaltschrankleuchte gelangt das diesbezügliche Leuchtengehäuse, insbesondere die Stirnseite des Leuchtengehäuses, mit dem Anschlag der Sperrklinke in Kontakt, mit der Folge einer Bewegung des Blockierstegs aus seiner Blockierposition heraus in eine Freigabeposition.

Die Erfindung soll nachstehend anhand von Ausführungsbeispielen sowie unter Zuhilfenahme von Figuren näher erläutert werden.

Hierbei zeigen:
- Fig. 1: eine Querschnittdarstellung einer Anordnung aus Gehäusegrundkörper der Schaltschrankleuchte mit Schwenklagerträger und im Schwenklagerträger eingesetzten Fußteil für eine Hutschienenmontage;
- Fig. 2: eine Seitenansicht auf Schwenklagerträger mit Fußteil zur Hutschienenmontage ähnlich derjenigen nach Fig. 1, jedoch ohne Gehäusegrundkörper;
- Fig. 3: Seitenansicht und Draufsicht auf ein Fußteil, ausgebildet zur DIN-Hutschienenmontage;
- Fig. 4: Draufsicht und Seitenansicht eines Schwenklagerträgers ohne Fußteil;
- Fig. 5: Unterseitenansicht einer Schaltschrankleuchte in der Ausführungsform mit Schalter, Seitenansicht einer solchen Schaltschrankleuchte, Stirnseitenansicht und Draufsicht auf eine derartige Leuchte;
- Fig. 6: Längs- und Seitenansicht sowie Draufsicht auf eine Schaltschrankleuchte mit integriertem Bewegungssensor;
- Fig. 7: Längsseitenansicht, Stirnseitenansicht und Draufsicht auf eine Schaltschrankleuchte mit Schwenklagerträger und Fußteil, montiert auf einer Hutschiene;
- Fig. 8: Längsseitenansicht, Stirnseitenansicht und Draufsicht auf eine Schaltschrankleuchte mit Schwenklagerträger und Fußteil, wobei das Fußteil zum Einsetzen in die mit Rastaussparungen versehenen Profile ausgebildet ist;
- Fig. 9: Längsseitenansicht, Seitenansicht und Draufsicht auf eine Schaltschrankleuchte mit Schwenklagerträger und Fußteil, wobei das Fußteil zur verschraubenden Montage ausgebildet ist;
- Fig. 10: (von oben nach unten) eine Draufsicht auf eine Schaltschrankleuchte, bestehend aus zwei gekoppelten Leuchten mit starrem Kopplungsstück sowie angekoppeltem Steckdosenmodul, eine Schaltschrankleuchte mit stirnseitig angekoppelten Batteriemodul und daran gekoppelten Steckdosenmodel sowie zwei aneinander gereihte Schaltschrankleuchten mit Endverschlussmodul, ausgebildet als Steckdose;
- Fig. 11a bis 11d: eine Darstellung der Koppelung von Schaltschrankleuchten mit gewährleisteter elektrischer Sicherheit durch die erfindungsgemäße Ausbildung einer Sperrklinke im Verbinder-Hohlkörper und
- Fig. 12a und 12b: eine Abfolge des Trennens zweier zusammengesteckter bzw. gekoppelter Schaltschrankleuchten.

Bei den nachfolgend geschilderten Ausführungsbeispielen werden für dieselben Mittel und Elemente die gleichen Bezugszeichen verwendet.

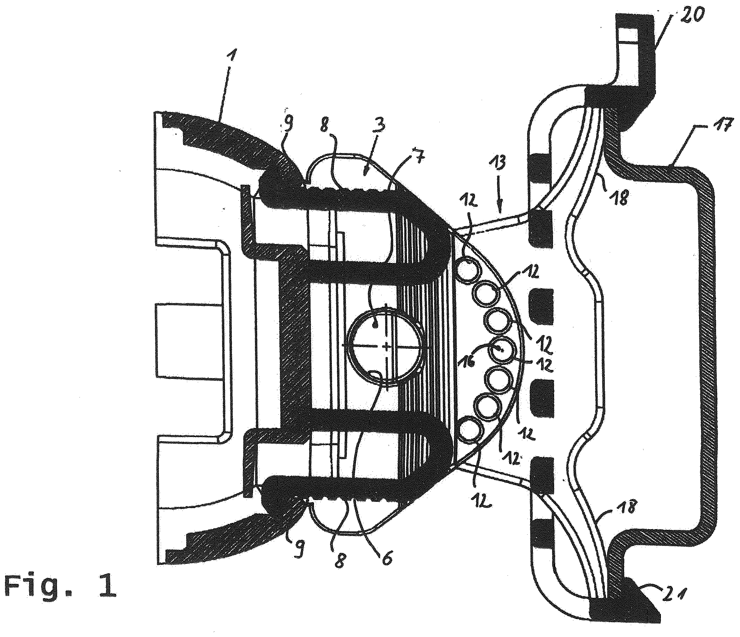

Wie aus der Fig. 1 und der dortigen Schnittdarstellung ersichtlich, ist ein Gehäusegrundkörper 1 vorhanden, welcher eine wannenartige Form besitzt.

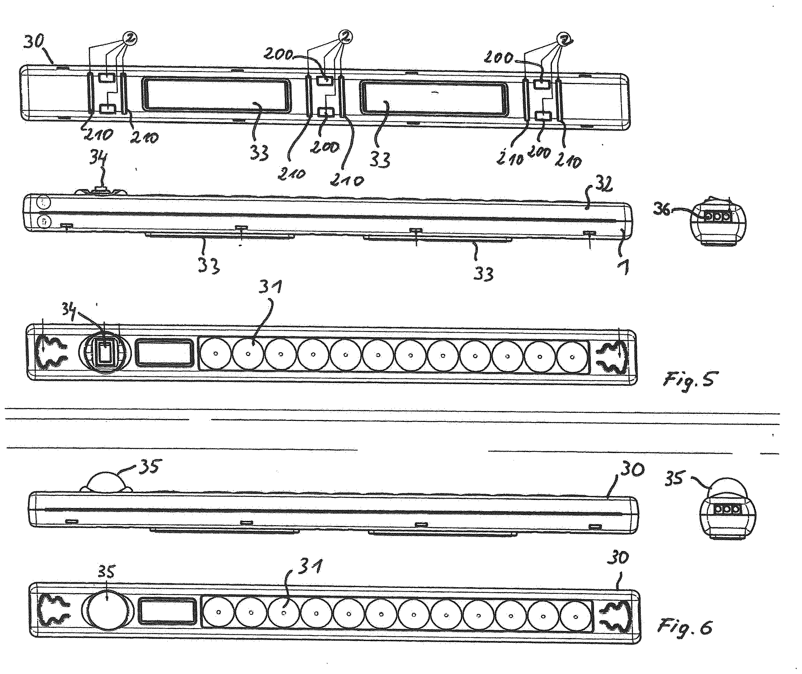

An der Unterseite des Gehäusegrundkörpers 1 sind Ausnehmungen oder Rücksprünge 2 (siehe auch Fig. 5) vorhanden, die zur lösbaren Aufnahme eines Schwenklagerträgers 3 dienen.

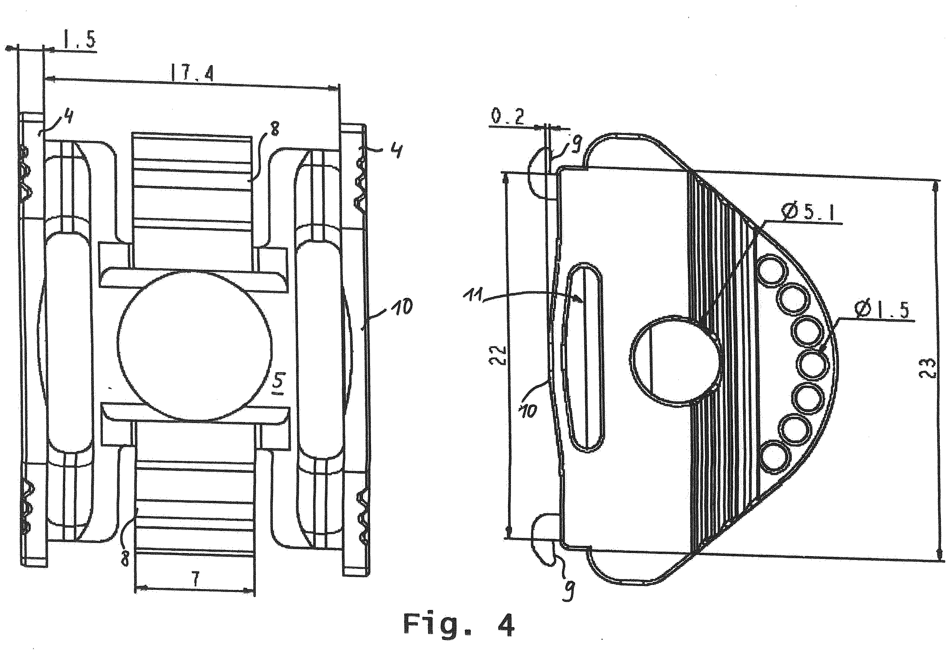

Der Schwenklagerträger 3 verfügt über zwei beabstandete Seitenflächen 4 (siehe auch Fig. 4). Die Seitenflächen 4 stehen über einen Steg 5 in Verbindung.

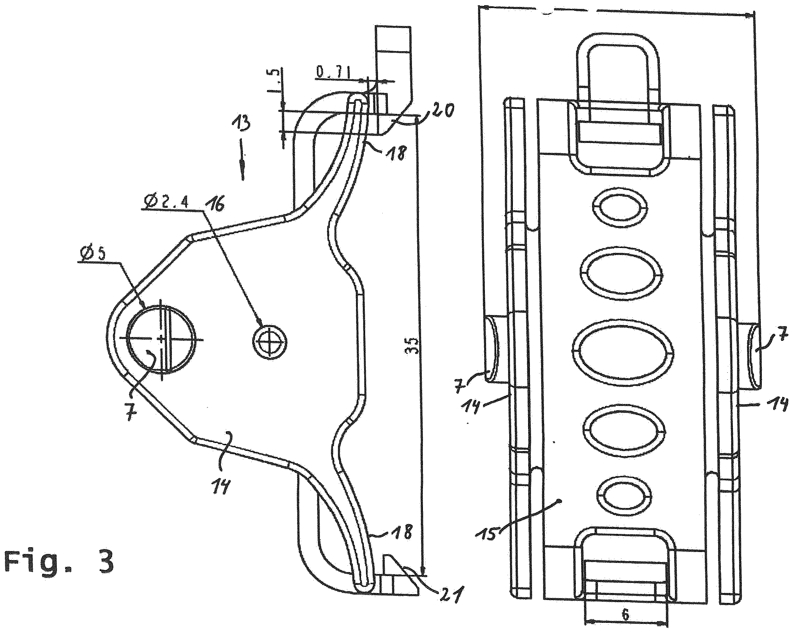

In den Seitenflächen 4 ist jeweils eine Aufnahme 6 für eine Schwenkachse 7 (siehe Fig. 3) ausgebildet.

Ausgehend vom Steg 5 erstrecken sich zwei Arme 8 zur Unterseite des Gehäusegrundkörpers 1.

Am jeweils freien Ende gehen die Arme 8 in jeweils einen Rasthaken 9 zum Eingriff in die jeweiligen Ausnehmungen oder Rücksprünge 2 im Gehäusegrundkörper 1 über.

Die Seitenflächen 4 des Schwenklagerträgers 3 besitzen jeweils eine nachgiebig federnde Anschlagkante 10.

Diese nachgiebig federnde Anschlagkante 10 wird durch eine überbogene Stegausbildung realisiert, wobei die Nachgiebigkeit einerseits materialbedingt und andererseits auf die hinter dem Steg befindliche Freifläche 11 zurückzuführen ist.

An der von der Anschlagkante 10 abgewandten Seite gegenüber dem diesbezüglich abgewandten Bereich sind in den entsprechenden Seitenflächen, radial ausgehend von der Aufnahme 6 für die Schwenkachse 7, kreisbogenförmig mehrere Rastungen 12 zur Arretierung des gewählten Schwenkwinkels vorgesehen.

Der Schwenklagerträger 3 ist mit verschiedenen Fußteilen kombinierbar, wie sich aus den figürlichen Darstellungen ergibt. Diesbezüglich weist das Fußteil 13 zwei Seitenwände 14 (siehe Fig. 3) auf und besteht aus einem Sockel 15.

Die Seitenwände 14 erstrecken sich vom Sockel 15 nach oben, so dass sich eine im Wesentlichen U-förmige Gestalt ergibt.

An den Seitenwänden 14 ist die Schwenkachse 7 oder ein entsprechender Achsstummel ausgebildet. Weiterhin befinden sich an den Seitenwänden zu den Rastungen 12 komplementäre Mittel 16, z.B. in Form einer Rasterhebung, wenn die Rastungen 12 als Rastrücksprünge oder Rastbohrungen ausgeführt sind.

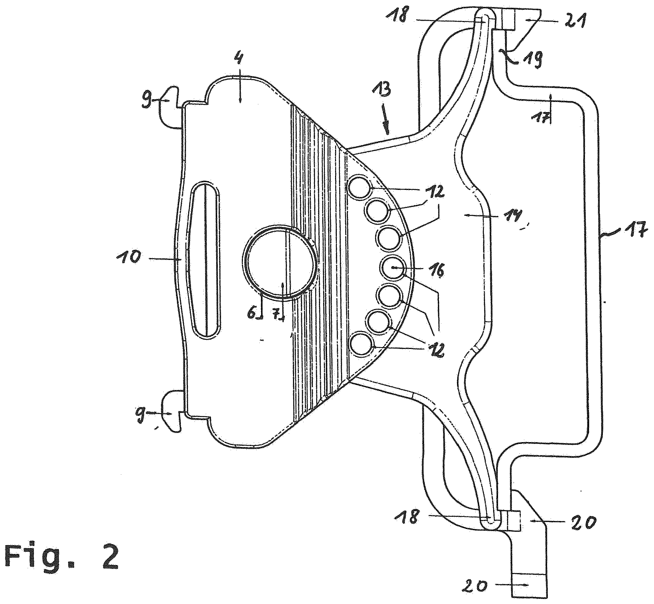

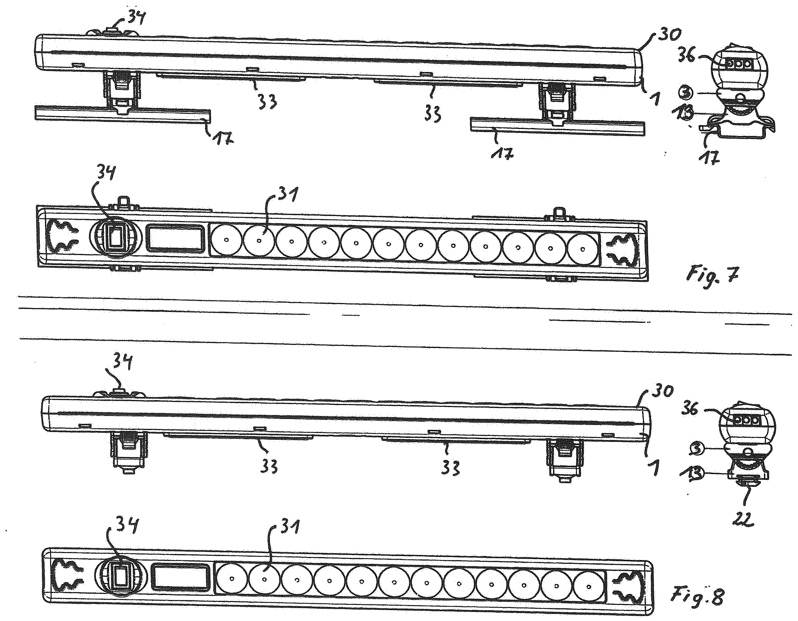

Der Sockel 15 kann Mittel zur Hutschienenmontage (siehe Fig. 2 und 3 in Verbindung mit Fig. 7) aufweisen. Diese Mittel ermöglichen ein klemmendes Hintergreifen einer entsprechenden Hutschiene 17. Auch diesbezüglich wird auf Anschlagenden 18, die mit abgekröpften Enden 19 der Hutschiene 17 in Kontakt kommen, und eine weitere Rastnase 20 und 21 verwiesen.

Am Sockel 15 können aber auch Spreizflächen mit Rücksprung 22 (siehe Fig. 8) zur Fixierung an mit Rastaussparungen versehenen Profilen vorhanden oder angeformt sein.

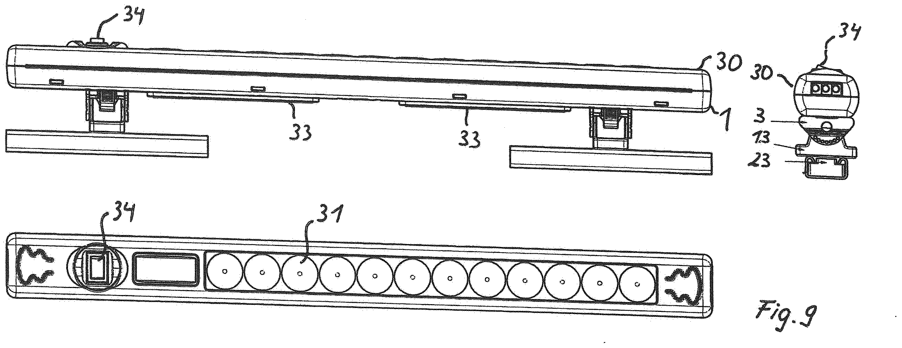

Ebenso kann der Sockel als Schraubsockel 23 (siehe Fig. 9) ausgeführt werden.

In Ausgestaltung der Erfindung weist die Unterseite des Gehäusegrundkörpers 1 jeweils gegenüberliegende Rücksprünge 200 zur Aufnahme der Rasthaken 9 und weiterhin rechtwinklig zur Längsachse des Leuchtengehäuses orientierte Nuten 210 auf, wobei die Anschlagkanten 10 des Schwenklagerträgers 3 in die jeweiligen Nuten 210 eintauchen.

Die Darstellungen nach Fig. 5 zeigen die langgestreckte Ausbildung der Schaltschrankleuchte 30 mit einer Vielzahl von im Gehäuse befindlichen lichtemittierenden Dioden 31. Das Gehäuse besteht aus dem erwähnten Gehäusegrundkörper 1 sowie einer strahlungsdurchlässigen Abdeckung 32.

An der Gehäuseunterseite können noch streifenartige Permanentmagneten 33 vorgesehen sein.

Bei der Darstellung nach Fig. 5 sind an der Oberseite des Leuchtengehäuses elektrische Schaltmittel 34 vorhanden.

Die Darstellung nach Fig. 6 zeigt alternativ den Einsatz eines Bewegungssensors 35 zum automatischen Aktivieren der Leuchte 30.

Über stirnseitige Konnektoren 36 sind die Leuchtengehäuse aneinander reihbar und elektrisch verbindbar.

Die Ansichten nach Fig. 7 zeigen eine Ausführungsform zur Befestigung der Schaltschrankleuchte 30 an einer Hutschiene 17, wie bereits erläutert.

Die Darstellungen nach Fig. 8 zeigen eine Befestigungsmöglichkeit über einen Sockel, der geeignet ist, in Aussparungen von Profilleisten eingerastet zu werden.

Die Fig. 9 bezieht sich auf eine Befestigung der Schaltschrankleuchte 30 über einen Schraubsockel 23.

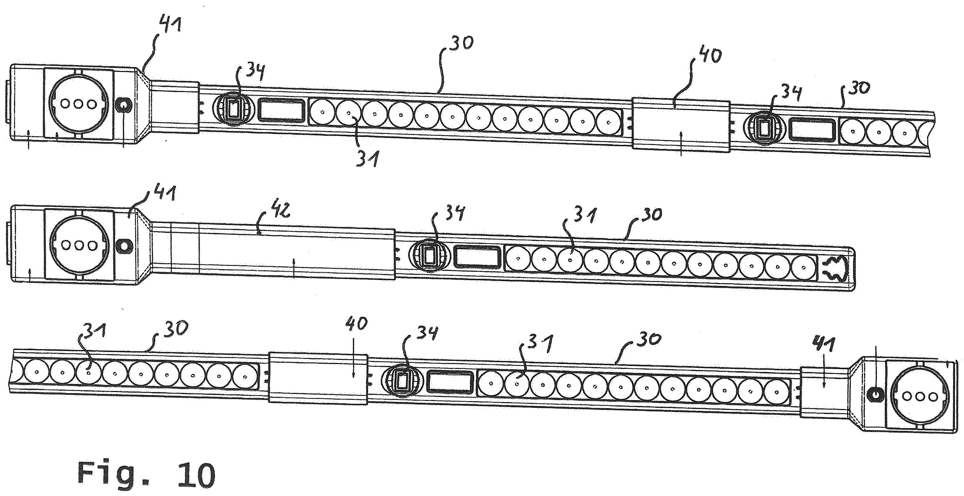

Die Darstellungen nach Fig. 10 betreffen verschiedene Möglichkeiten des Aneinanderreihens mehrerer Schaltschrankleuchten 30 über ein starres Verbindungselement 40. Weiterhin ist ein Steckdosenmodul 41 vorgesehen und es besteht die Möglichkeit des Bildens einer Aneinanderreihung von Steckdosenmodul 41, Batteriemodul 42 und der eigentlichen Schaltschrankleuchte 30.

Auch zum endseitigen Abschluss ist ein spezielles Steckdosenmodul 41 ankoppelbar. Der Querschnitt der Schaltschrankleuchte ist bevorzugt so ausgeführt, dass die Leuchte auch mit an sich bekannten, kreisbogenförmigen Halteklammern fixierbar ist, so dass sich die universelle Verwend- und Einsatzbarkeit weiter verbessert.

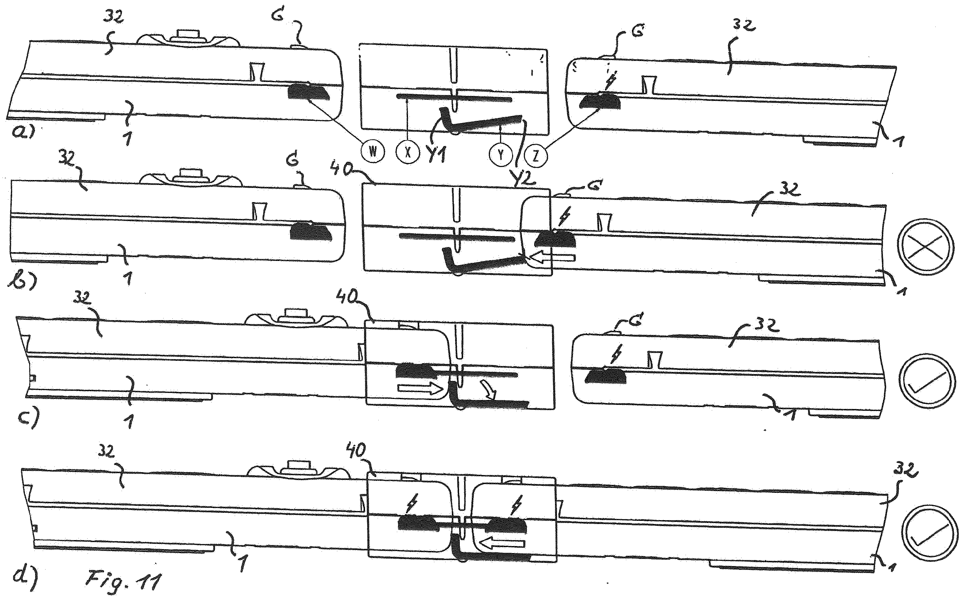

Mit Hilfe der Fig. 11a bis 11d soll erläutert werden, in welcher Weise über ein Verbindungselement mehrere Schaltschrankleuchten gekoppelt werden können.

Wie in der Fig. 11a ersichtlich, gilt es, zwei Schaltschrankleuchten mit Gehäusegrundkörper 1 und lichtdurchlässiger Abdeckung 32 sowie elektrischen Anschlusselementen W und Z zu verbinden und als Verbindungselement ein beidseitig offener Hohlkörper 40 eingesetzt wird und die gegenüberliegenden offenen Seiten des Hohlkörpers eine Querschnittsfläche aufweisen, welche der Querschnittsform des Leuchtengehäuses im Wesentlichen komplementär ist derart, dass die jeweiligen Enden des Leuchtengehäuses in den Hohlkörper 40 einsteck- und dort arretierbar sind.

Im Inneren des Hohlkörpers 40 sind elektrische Verbinder z.B. in Form von Pins X angeordnet bzw. eingebracht.

Beim Beispiel gemäß den Fig. 11a bis 11d steht die im Bild rechts gezeigte Schaltschrankleuchte unter Spannung (symbolisiert mit dem Blitzzeichen).

Solange die wie in der Fig. 11a bis 11d gezeigte linke Schaltschrankleuchte noch nicht in die entsprechende offene Seite des Hohlkörpers 40 eingesteckt wurde, befindet sich die Sperrklinke Y mit ihrem Blockiersteg Y2 in Blockierposition.

Dies ist mit der Fig. 11b gezeigt.

Erst dann, wenn die linke Schaltschrankleuchte in die offene Seite des Hohlkörpers 40 eingeschoben wurde, gelangt die Stirnseite des betreffenden Leuchtengehäuses in Kontakt mit dem Anschlag Y1 der Sperrklinke Y. Hierdurch bewegt sich der Blockiersteg Y2 gemäß der Darstellung in der Fig. 11c nach unten, d.h. es findet eine Bewegung des Blockierstegs Y2 in seine Freigabeposition statt. Gemäß der nächstfolgenden Darstellung 11d kann dann das betreffende Ende des Leuchtengehäuses der im Bild rechts gezeigten Schaltschrankleuchte in den Hohlkörper 40 eingeschoben werden. Über die Pins X ist jetzt die elektrische Verbindung zwischen den beiden Schaltschrankleuchten hergestellt.

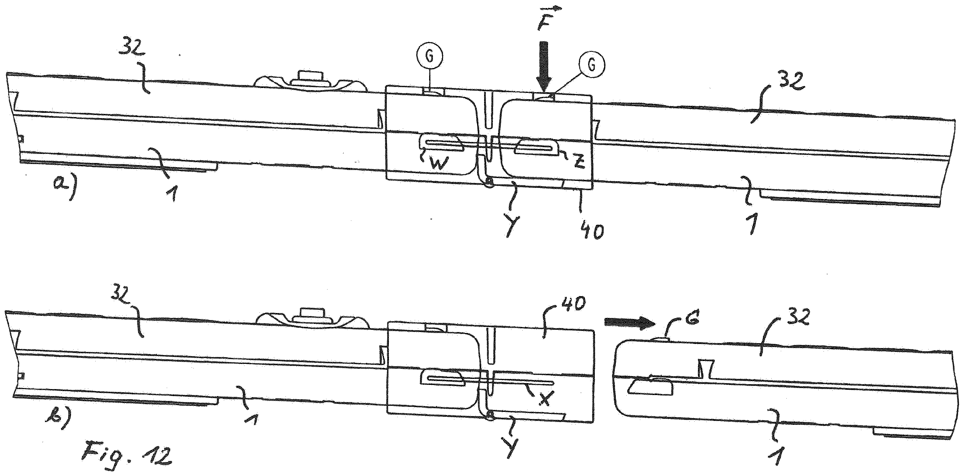

Die Fig. 12a und 12b zeigen auf, wie ein Trennen der beiden Schaltschrankleuchten realisierbar ist.

Diesbezüglich erfolgt gemäß der Pfeildarstellung nach Fig. 12a das Einwirken einer Druckkraft F auf die Rastnase G derart, dass diese in der Lage ist, aus einer Rastausnehmung im Hohlkörper 40 herauszutreten. Hiernach kann, wie in der Fig. 12b gezeigt, die rechte Schaltschrankleuchte aus dem Verbindungselement entfernt werden.

## Patentansprüche

1. Verbindungselement zum Koppeln von Schaltschrankleuchten mit Leuchtmitteln auf der Basis von lichtemittierenden Dioden (31), bestehend aus einem langgestreckten Leuchtengehäuse mit Gehäusegrundkörper (1) und lichtdurchlässiger Abdeckung (32) sowie elektrischen Anschlusselementen und am Leuchtengehäuse vorgesehenen Mitteln zur universellen Befestigung, ferner umfassend einen Schwenklagerträger, wobei
der Gehäusegrundkörper (1) wannenartig ausgebildet ist und an seiner Unterseite und/oder im Seitenwandbereich mehrere beabstandete Ausnehmungen oder Rücksprünge (2) zur lösbaren Aufnahme eines Schwenklagerträgers (3) vorgesehen sind,
der Schwenklagerträger (3) zwei, über einen Steg (5) verbundene Seitenflächen (4) besitzt, wobei die Seitenflächen (4) jeweils eine Aufnahme (6) für eine Schwenkachse (7) oder jeweils einen Schwenkachsenstummel aufweisen, weiterhin ausgehend vom Steg (5) Arme (8) ausgebildet sind, welche zur Unterseite oder zum Seitenwandbereich des Gehäusegrundkörpers (1) orientiert sind und an ihrem freien Ende jeweils in eine Rastnase oder einen Rasthaken (9) zum Eingriff in die jeweiligen Ausnehmungen oder Rücksprünge (2) übergehen,
die Seitenflächen (4) des Schwenklagerträgers (3) eine nachgiebig federnde Anschlagkante (10) besitzen, welche mit der Unterseite des Gehäusegrundkörpers (1) in Kontakt bringbar ist, wobei im von der Anschlagkante (10) abgewandten Bereich in den Seitenflächen, radial ausgehend von der Aufnahme (6) für die Schwenkachse (7) oder den Schwenkachsenstummel, kreisbogenartig mehrere Rastungen (12) zur Schwenkwinkelarretierung vorgesehen sind, wobei
das Verbindungselement aus einem beidseitig offenen Hohlkörper (40) besteht, wobei die gegenüberliegenden offenen Seiten des Hohlkörpers (40) eine Querschnittsfläche aufweisen, welche der Querschnittsform des Leuchtengehäuses komplementär ist, derart, dass die jeweiligen Enden des Leuchtengehäuses in den Hohlkörper (40) einsteck- und dort arretierbar sind, wobei Inneren des Hohlkörpers elektrische Verbinder (X) angeordnet sein, welche mit Konnektoren (W; Z) im Leuchtengehäuse korrespondieren, weiterhin umfassend eine verschwenkbewegliche Sperrklinge (Y) mit einem Anschlag (Y1) sowie einem Blockiersteg (Y2), wobei der Blockiersteg (Y2) ein Einstecken einer spanungsführenden Schaltschrankleuchte verhindert, bis in die gegenüberliegende offene Seite des Hohlkörpers (40) eine weitere, anzukoppelnde Schaltschrankleuchte eingesteckt ist.

2. Verbindungselement nach Anspruch 1,
**dadurch gekennzeichnet, dass**
mit erfolgendem Einstecken der spannungslosen Schaltschrankleuchte das Leuchtengehäuse dieser mit dem Anschlag (Y1) der Sperrklinke (Y) in Kontakt gelangt mit der Folge einer Bewegung des Blockierstegs (Y2) aus seiner Blockierposition in eine Freigabeposition.

## Claims

1. Connection element for the coupling of switchgear cabinets luminaires, comprising illuminants on the basis of light-emitting diodes (31), consisting of an elongated luminaire housing having a housing main body (1) and a translucent cover (32) as well as electrical connection elements and means for universal fixing provided on the luminaire housing, further comprising a pivot bearing support, wherein
the housing main body (1) is formed in the manner of a trough, and a plurality of spaced recesses or set-back portions (2) are provided for the releasable accommodation of a pivot bearing support (3) on its bottom side and/or in the side wall region,
the pivot bearing support (3) comprises two side surfaces (4) which are connected via a web (5), the side surfaces (4) each comprising a receptacle (6) for a pivot shaft (7) or a respective pivot shaft stub; wherein arms (8) are further formed which originate from the web (5), which arms are oriented towards the bottom side or the side wall region of the housing main body (1) each converging at their free end into a detent lug or a detent hook (9) for engagement in the respective recesses or set-back portions (2),
the side surfaces (4) of the pivot bearing support (3) comprise a yieldingly resilient stop edge (10), which can be brought into contact with the bottom side of the housing main body (1), wherein in the region facing away from the stop edge (10), a plurality of atches (12) for locking the pivot angle are provided in the manner of a circular arc in the side surfaces, which latches originate radially from the receptacle (6) for the pivot shaft (7) or the pivot shaft stub (12), wherein
the connection element consists of a hollow body (40) which is open on both sides, wherein the opposite open sides of the hollow body (4) have a cross-sectional surface which is complementary to the cross-sectional shape of the luminaire housing, such that the respective ends of the luminaire housing can be inserted in the hollow body (40) and can be locked there,
wherein electrical connectors (X) are arranged in the interior of the hollow body, which correspond to connectors (W; Z) in the luminaire housing, further comprising a pivotably movable pawl (Y) with a stop (Y1) and a blocking web (Y2), wherein the blocking web (Y2) prevents a plugging in of a live switchgear cabinet luminaire until a further switchgear cabinet luminaire to be coupled is inserted into the opposite side of the hollow body (40).

2. Connection element according to Claim 1,
**characterized in that**,
upon successful insertion of the voltage-free switchgear cabinet luminaire into the luminaire housing, this luminaire comes into contact with the stop (Y1) of the pawl (Y), with the consequence of moving the blocking web (Y2) from the blocking position to a release position.

## Revendications

1. Élément de liaison pour le couplage d'éclairages d'armoire électrique ayant des moyens d'éclairage à base de diodes électroluminescentes (31), constitué par un boîtier d'éclairage étiré en longueur ayant un corps de base de boîtier (1) et un recouvrement translucide (32) ainsi que des éléments de connexion électrique et des moyens de fixation universelle prévus sur le boîtier d'éclairage,
comprenant en outre un support de palier de basculement,
dans lequel
le corps de base de boîtier (1) est réalisé en forme de cuve et plusieurs évidements ou retraits (2) espacés pour la réception détachable d'un support de palier de basculement (3) sont prévus sur son côté inférieur et/ou dans la zone de paroi latérale,
le support de palier de basculement (3) possède deux surfaces latérales (4) reliées par une barrette (5), les surfaces latérales (4) présentant chacune un logement (6) pour un axe de basculement (7) ou pour un moignon d'axe de basculement, et
des bras (8) sont réalisés à partir de la barrette (5) qui sont orientés vers le côté inférieur ou vers la zone de paroi latérale du corps de base de boîtier (1) et se transforment, à leur extrémité libre, chacun en un ergot d'enclenchement ou en un crochet d'enclenchement (9) pour venir s'engager dans les évidements ou retraits respectifs (2),
les surfaces latérales (4) du support de palier de basculement (3) possèdent une arête de butée (10) élastiquement souple qui est susceptible d'être amenée en contact avec le côté inférieur du corps de base de boîtier (1), et dans la zone détournée de l'arête de butée (10), dans les surfaces latérales, il est prévu plusieurs crans (12) en forme d'arc de cercle partant radialement du logement (6) pour l'axe de basculement (7) ou pour le moignon d'axe de basculement et destinés à arrêter l'angle de basculement,
l'élément de liaison est constitué par un corps creux (40) ouvert sur les deux côtés, les côtés ouverts opposés du corps creux (40) présentant une surface de section transversale qui est complémentaire de la forme en section transversale du boîtier d'éclairage, de telle sorte que les extrémités respectives du boîtier d'éclairage peuvent être enfichées dans le corps creux (40) et y être arrêtées, des connecteurs électriques (X) étant agencés à l'intérieur du corps creux qui correspondent avec des éléments connecteurs (W ; Z) dans le boîtier d'éclairage,
comprenant en outre un cliquet d'arrêt (Y) mobile en basculement et pourvu d'une butée (Y1) ainsi que d'une barrette de blocage (Y2), la barrette de blocage (Y2) empêchant un enfichage d'un éclairage d'armoire électrique sous tension, jusqu'à ce qu'un autre éclairage d'armoire électrique à coupler soit enfiché dans le côté ouvert opposé du corps creux (40).

2. Élément de liaison selon la revendication 1,
**caractérisé en ce que**
lors de l'enfichage de l'éclairage d'armoire électrique sans tension, le boîtier d'éclairage de celui-ci vient en contact avec la butée (Y1) du cliquet d'arrêt (Y), ayant pour conséquent un mouvement de la barrette de blocage (Y2) hors de sa position de blocage jusque dans une position de libération.
